## Europäisches Patentamt
## European Patent Office
## Office européen des brevets

(19)

(11) Veröffentlichungsnummer: **0 012 867**
**B1**

(12)

# EUROPÄISCHE PATENTSCHRIFT

(45) Veröffentlichungstag der Patentschrift:
**21.04.82**

(51) Int. Cl.³: **G 01 B 7/16**, G 01 L 1/16, G 01 L 5/00

(21) Anmeldenummer: **79104757.4**

(22) Anmeldetag: **29.11.79**

(54) **Piezoelektrischer Dehnungsaufnehmer.**

(30) Priorität: **22.12.78 DE 2855746**

(43) Veröffentlichungstag der Anmeldung:
**09.07.80 Patentblatt 80/14**

(45) Bekanntmachung des Hinweises auf die Patenterteilung:
**21.04.82 Patentblatt 82/16**

(84) Benannte Vertragsstaaten:
**AT CH DE FR GB IT SE**

(56) Entgegenhaltungen:
**CH-A-472 668**
**DE-C-1 195 512**

(73) Patentinhaber: **Kistler, Instrumente AG,
Eulachstrasse 22, CH-8408 Winterthur (CH)**

(72) Erfinder: **Wolfer, Peter, Kirchweg 347, CH-8450 Klein Andelfingen (CH)**
Erfinder: **Derrer, Hansrudolf, Schulstrasse 13, CH-8462 Rheinau (CH)**
Erfinder: **Vollenweider, Max, Dipl.-Ing., Nelkenstrasse 6, CH-8400 Winterthur (CH)**
Erfinder: **Sonderegger, Hans-Conrad, Dipl.-Ing., Sonnhaldenstrasse 7, CH-8413 Neftenbach (CH)**

(74) Vertreter: **Schmidt, Horst, Dr. et al, Patentanwälte Pohlmann & Schmidt Siegfriedstrasse 8, D-8000 München 40 (DE)**

## Piezoelektrischer Dehnungsaufnehmer

Die Erfindung betrifft einen piezoelektrischen Dehnungsaufnehmer zur Ermittlung der Dehnung einer Meßstrecke auf der Oberfläche eines Prüfkörpers und/oder einer auf den Prüfkörper einwirkenden Kraft, mit wenigstens einer unter Vorspannung gehaltenen piezoelektrischen Platte und einem an die Enden der Meßstrecke ankoppelbaren Kraftübertragungsglied zur abstimmbaren Kraftbeaufschlagung der piezoelektrischen Platte.

Jedes Bauteil, das Kräfte zu übertragen hat, wird durch diese beansprucht und erleidet eine Deformation. Dabei ist nach dem Hockschen Gesetz die Dehnung eines Materials proportional zur Spannung. Am einfachsten läßt sich dieser Zusammenhang an Zugstangen nachprüfen, wo ein einfacher, einachsiger Spannungszustand herrscht, indem man die Dehnung in Kraftrichtung mißt. Zug- und Druckspannungen können sich jedoch auch in drei Raumrichtungen mit Schubspannungen um drei verschiedene Achsen überlagern. Jede Zug- oder Druckspannung bewirkt dabei Deformationen senkrecht zur Richtung der Kraft (Poisson-Effekt), und bei kompliziert gestalteten Werkstücken wird die Spannungsverteilung insgesamt so inhomogen und kompliziert, daß sie kaum mehr berechenbar ist. Deshalb wurde schon seit langer Zeit versucht, die Deformationen direkt mittels Dehnungsaufnehmern zu messen. Ursprünglich stand dabei die Ermittlung der Materialbeanspruchung im Mittelpunkt des Interesses. Beim vorliegenden Dehnungsaufnehmer steht nicht dieser Zweck im Vordergrund, sondern die Bestimmung der in einer Maschine oder einem Bauteil wirkenden Kräfte. Wie kompliziert die Spannungsfelder in einem Maschinenteil auch sein mögen, die an irgendeiner Stelle gemessene Dehnung ist der an einer anderen Stelle einwirkenden Kraft proportional. Dabei ist es nicht notwendig, die Dehnung an einer stark beanspruchten Stelle zu messen. Oft sind gerade diese Stellen schlecht zugänglich, bewegen sich oder sind ungünstigen Umweltbedingungen ausgesetzt. Es ist eine besondere Eigenart des hier beschriebenen piezoelektrischen Dehnungsaufnehmers, daß er eine große Empfindlichkeit besitzt, und somit schon geringe Dehnungen in einem Maschinengestell oder Fundament gemessen werden können. Der Zusammenhang zwischen gemessener Dehnung und wirkender Kraft kann durch eine Kalibrierung mittels eines Referenzkraftmeßelementes leicht bestimmt werden.

Für Dauerüberwachungen, insbesondere für den Überlastungsschutz, wurden Dehnungsaufnehmer entwickelt, die mit Schrauben an der Oberfläche des Prüfkörpers befestigt werden. Bei bekannten Konstruktionen, wie z. B. nach der DE-OS 2 617 987, erfolgt die Befestigung mit mehreren Schrauben am Prüfkörper, so daß sich bei einer Dehnung des Prüfkörpers die Länge der Basis- oder Meßstrecke zwischen den Gewindebohrungen für die Schrauben entsprechend vergrößert. Dieses Auseinanderziehen der Schrauben wird auf ein S-förmiges Federglied übertragen, das mit den beiden Schraubenführungen verbunden ist. Am Federglied sind Dehnungsmeßstreifen befestigt, die bei einer Dehnung ihren Widerstandswert ändern. Die Dehnung des Prüfkörpers wird somit auf etwas komplizierte Weise auf die Dehnungsmeßstreifen überführt, wobei anstelle einer direkten Aufklebung der Dehnungsmeßstreifen auf den Prüfkörper eine Schraubverbindung vorgesehen ist, die zwar dauerhafter als eine Klebverbindung ist, aber in Bezug auf Lochabstand, vertikale Ausrichtung der Bohrungsachsen und Planheit der Auflage enge Toleranzen erfordert. Zudem ist die Empfindlichkeit von Dehnungsmeßstreifen, verglichen z. B. mit piezoelektrischen Aufnehmern, gering. Ein Dehnungsmeßstreifen, der auf eine Unterlage aufgeklebt ist, die eine Dehnung von 1 μm erfährt, gibt nur ein Nutzsignal von etwa $10^{-5}$ Volt ab, während eine herkömmliche X-Schnitt-Quarzplatte von 1 cm² Fläche und 1 mm Dicke unter den gleichen Verhältnissen ein Nutzsignal von etwa 4,42 Volt liefert. Piezoelektrische Aufnehmer sind also inhärent um Größenordnungen empfindlicher als Aufnehmer auf Basis von Dehnungsmeßstreifen.

Piezoelektrische Dehnungsaufnehmer sind bekannt. Ein bekannter Aufnehmer dieser Art wird in der DE-OS 2 634 385 beschrieben. Ebenso wie bei dem oben beschriebenen DMS-Aufnehmer müssen an den Enden einer Basisstrecke zwei Gewindebohrungen in die Oberfläche des Prüfkörpers eingebracht werden. In diese Bohrungen werden die beiden Schrauben eingeschraubt. Zwischen den speziell geformten Schraubenköpfen ist ein piezoelektrisches, auf Druckkraft empfindliches Wandlerelement mit Piezokeramik eingeklemmt. Eine Dehnung oder Kompression des Prüfkörpers bewirkt eine Verkleinerung oder eine Vergrößerung der Klemmspannung, was am piezoelektrischen Wandlerelement eine elektrische Spannung bzw. eine elektrische Ladung hervorruft. Nachteil dieser Dehnungsaufnehmer ist einmal deren schwierige Montage und Justierung. Die Einspannlänge des Wandlerelementes zwischen den Schraubenköpfen muß in der Weise abgestimmt werden, daß die richtige Vorspannung vorliegt. Dabei wirken die Schrauben als Biegefedern, und kann, da die Einschraublänge der Schrauben in den Gewindebohrungen nicht genau definiert ist, mit einer guten Linearität nicht gerechnet werden. Außerdem verwendet der bekannte Dehnungsaufnehmer als Wandlerelement eine Piezokeramik, die aufgrund ihrer herkömmlichen Polarisierung keine linearen Meßsignale liefert und eine große Hysterese aufweist. Der hohe Pyroeffekt der verwendeten Piezokeramik kann ferner bei schnellen Temperaturänderungen in der Umgebung des Aufnehmers zu einer Übersteuerung des Nachfolgeverstärkers infolge großer Pyrospannung am Eingang führen. Da die Meßwerterfassung unter Ausnutzung des piezoelektrischen Longitudinaleffektes erfolgt, können sich, wie nachfolgend noch näher erläutert wird, überlagerte Biegemomente und dgl. direkt meßwertverfälschend auswirken.

Schließlich ist aus der CH-PS 472 668 ein piezoelektrischer Kraftaufnehmer mit einer Mehrkomponenten-Kraftmeßzelle zur Messung der in verschiedenen Koordinatenrichtungen wirkenden Kräfte in einem Bauteil bekannt. Dieser Aufnehmer verwendet eine Anordnung von aufeinandergeschichteten piezoelektrischen Platten, die durch zwei abstimmbare Membranen mit einem Gehäuse schubelastisch verbunden sind. Gleichzeitig halten die Membranen die Piezoplatten unter Vorspannung. Von den aufeinandergeschichteten Piezoplatten sind die einen auf Druck, die anderen auf Schub empfindlich. Dieser bekannte Aufnehmer eignet sich jedoch nicht zur Messung einer Oberflächendehnung an einem Bauteil, sondern muß ohne Kraftnebenschluß direkt in den Kraftlinienfluß des Bauteiles nach Art einer Kraftmeßdose integriert oder zur Beschleunigungsmessung formschlüssig mit dem Bauteil verbunden werden.

Demgegenüber liegt der Erfindung die Aufgabe zugrunde, einen piezoelektrischen Dehnungsaufnehmer der eingangs erwähnten Gattung zu schaffen, der bei einfachem und robustem Aufbau und Störungsempfindlichkeit gegenüber Temperaturschwankungen, überlagerten Biegekräften, behinderter Querausdehnung und dgl. in einfacher Weise am Prüfkörper anbringbar und auf die jeweiligen Beanspruchungsverhältnisse an Ort und Stelle einjustierbar ist.

Diese Aufgabe wird erfindungsgemäß durch die Merkmale im kennzeichnenden Teil des Patentanspruchs 1 gelöst.

Anders als bei den bislang bekannten piezoelektrischen Dehnungsaufnehmern sieht die Erfindung ein oder mehrere piezoelektrische Elemente oder Platten vor, die nur auf Schub in einer bestimmten Richtung piezoelektrisch reagieren und in einem Kraftübertragungsglied, das durch nur eine Spannschraube kraftschlüssig an die Enden der Meßstrecke über zwei beabstandete Auflageflächen ankoppelbar ist, so angeordnet sind, daß eine Änderung des Abstandes der beiden Auflageflächen die piezoelektrischen Platten im wesentlichen nur mit einer Schubkraft beaufschlagt. Vorzugsweise ist wenigstens eine der Auflageflächen an einem federelastischen Glied vorgesehen, das an der Schubkrafteinleitung bzw. -übertragung beteiligt ist und durch Wahl einer entsprechenden Federelastizität eine leichte Abstimmung der Empfindlichkeit des Dehnungsaufnehmers ermöglicht. Als Material für die piezoelektrischen Platten wird vorzugsweise wegen der guten Linearität und des fehlenden Pyroeffektes ein Quarzkristall mit einem sog. Y-Schnitt vorgesehen, doch kann auch eine derart polarisierte Piezokeramik verwendet werden, daß diese nur auf Schubbeanspruchung anspricht. Wegen der kraftschlüssigen Ankopplung des Dehnungsaufnehmers mit Hilfe nur einer einzigen Spannschraube ergibt sich nicht nur eine einfachere Montage und Demontage des Aufnehmers an einem Prüfkörper oder Bauteil, sondern auch die Möglichkeit, bei nicht genau vorbekanntem maximalem Kraftlinienverlauf im Prüfkörper den Dehnungsaufnehmer an Ort und Stelle auf die maximalen Beanspruchungsverhältnisse einstellen zu können. Hierzu kann man direkt an dem zu überwachenden Bauteil unter Vergleich mit einer Kraftmeßzelle in dessen Hauptkraftfluß eine stufenweise Kalibrierung vornehmen und den Dehnungsaufnehmer dann schrittweise so lange winkelmäßig verdrehen, bis bei einer bestimmten Bauteilbelastung eine maximale Meßwertanzeige vorliegt. Wegen der kraftschlüssigen Ankopplung des Aufnehmers über zwei beabstandete Auflageflächen ergibt sich ferner ein Überlastungsschutz, indem bei Überschreiten bestimmter Verformungsgrenzen der Aufnehmer an seinen Auflageflächen durchrutscht und dadurch Beschädigungen durch Überlastung verhindert werden. Nach einer solchen Überlastung braucht die Spannschraube des Dehnungsaufnehmers lediglich gelöst und erneut ohne wiederholte Eichung angezogen werden.

Bezüglich Weiterbildungen der Erfindung wird auf die Patentansprüche verwiesen.

Die erfindungsgemäße Kombination von piezoelektrischen, nur auf Schubkräfte ansprechenden Platten und einem kraftschlüssig an die Enden der Meßstrecke eines Prüfkörpers oder Bauteils ankoppelbaren Kraftübertragungsglied zur Schubkraftbeaufschlagung der Piezoplatten in Gestalt eines Kraftnebenschlusses stellt somit einen wesentlichen Fortschritt auf dem Gebiet der Betriebsüberwachung von Arbeitsmaschinen, insbesondere solchen dar, die zyklischen Belastungen unterworfen sind.

Zusammengefaßt wird durch die Erfindung ein piezoelektrischer Dehnungsaufnehmer geschaffen, der durch eine einzige Spannschraube auf der Oberfläche eines durch Kräfte beanspruchten Bauteiles befestigt wird und mit zwei Auflageflächen an den Enden einer Meß- oder Basisstrecke des Bauteiles kraftschlüssig aufliegt. Eine Dehnung in der Oberfläche des Bauteiles bewirkt eine Änderung der Meßstrecke und damit eine Verrückung der Auflageflächen, wodurch ein oder mehrere schubempfindliche piezoelektrische Platten einer Schubkraft ausgesetzt werden. Die entstehende piezoelektrische Ladung ist ein Maß für die Dehnung im Bauteil und damit für die an der gewählten Stelle des Bauteiles wirkende Kraft.

Ausführungsformen der Erfindung werden nachfolgend anhand der Zeichnung unter vorhergehender Bezugnahme auf den Ausgangspunkt der Erfindung näher erläutert. Es zeigt

Fig. 1 eine teilweise geschnittene schematische Ansicht von einem mit zwei Schrauben an einem Prüfkörper ankoppelbaren Dehnungsaufnehmer mit einem als Zuglasche ausgebildeten federelastischen Glied,

Fig. 2 eine teilweise geschnittene schematische Ansicht von einem Dehnungsaufnehmer ähnlicher Bauart wie in Fig. 1 mit einem als Biegefeder ausgebildeten federelastischen Glied,

Fig. 3 eine geschnittene Ansicht einer ersten Ausführungsform von einem erfindungsgemäß aufgebauten Dehnungsaufnehmer,

Fig. 4 eine Draufsicht auf die Ausführungsform nach Fig. 3,

Fig. 5 eine längsgeschnittene Ansicht einer zweiten Ausführungsform von einem erfindungsgemäß aufgebauten Dehnungsaufnehmer,

Fig. 6 eine Draufsicht auf die Ausführungsform nach Fig. 5,

Fig. 7 eine perspektivische Detailansicht von bei der Ausführungsform nach Fig. 5 bevorzugt verwendeten halbringförmigen piezoelektrischen Platten und

Fig. 8 schematisch die Schritte zur Herstellung der halbringförmigen piezoelektrischen Platten gemäß Fig. 5 und 7.

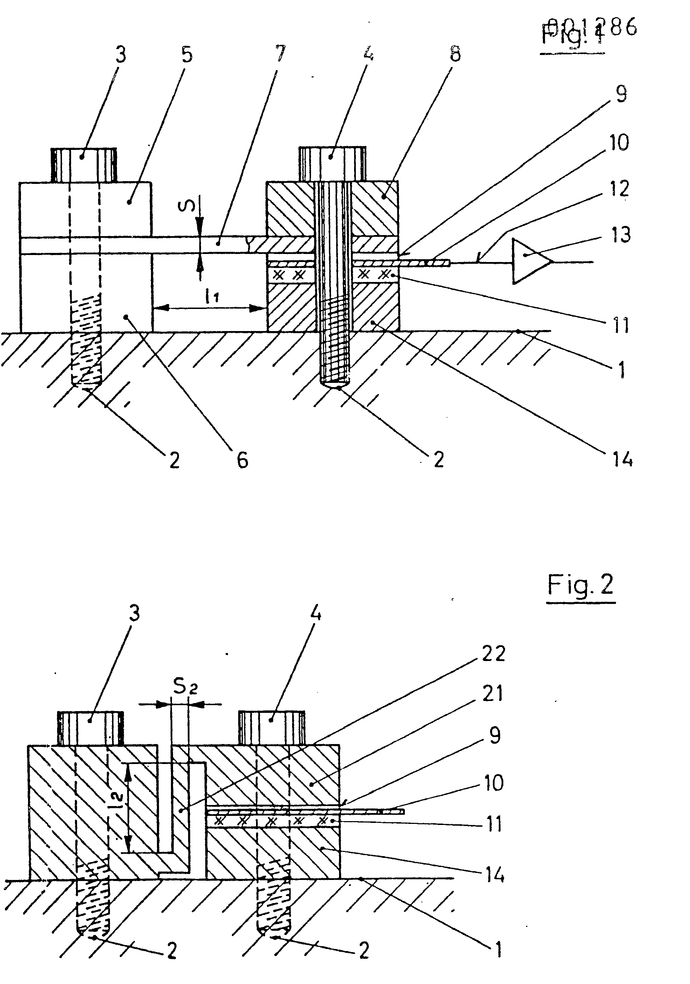

In der Zeichnung sind durchgehend gleiche oder gleichartige Teile mit den gleichen Bezugszeichen versehen. Bevor auf die piezoelektrischen Dehnungsaufnehmer nach der Erfindung im einzelnen eingegangen wird, werden nachfolgend anhand von Fig. 1 und 2 zwei Ausführungen von an sich neuartigen piezoelektrischen Dehnungsaufnehmern erläutert, um den Ausgangspunkt der Erfindung zu verdeutlichen.

In Fig. 1 betrifft das Bezugszeichen 1 die Oberfläche eines Prüfkörpers, z. B. eines Teiles oder Abschnittes einer Maschine oder Vorrichtung, der einer Belastung ausgesetzt ist und in den an einer geeigneten Stelle zwei voneinander beabstandete Gewindebohrungen 2 zum Einschrauben einer Befestigungsschraube 3 und einer Spannschraube 4 eingebracht sind. Bei dem Dehnungsaufnehmer nach Fig. 1 besteht das Kraftübertragungsglied aus zwei in Abstand voneinander liegende Blockanordnungen, die über eine das elastische Glied darstellende Zuglasche 7 miteinander verbunden sind. Die eine in der Zeichnung linke Blockanordnung umfaßt zwei Unterlagscheiben 5, 6, zwischen denen der eine benachbarte Endbereich der Zuglasche 7 mittels der sich durch die besagten Teile erstreckenden Befestigungsschraube 3 eingeklemmt wird. Die andere in der Zeichnung rechte Blockanordnung umfaßt eine obere Deckscheibe 8 und eine untere auf der Oberfläche 1 des Prüfkörpers aufliegende Schubplatte 14, die zwischen sich in der Reihenfolge von oben nach unten den anderen Endbereich der Zuglasche 7, eine Isolationsplatte 9, eine Elektrode 10 und eine piezoelektrische Platte 11 einschließen, wobei diese Teile durch die sich hindurcherstreckende Spannschraube 4 unter Vorspannung der piezoelektrischen Platte 11 zusammengepreßt werden.

Bei an dem Prüfkörper mittels der Schrauben 3, 4 befestigtem Dehnungsaufnehmer bewirkt eine Dehnung des Prüfkörpers, daß sich der Abstand zwischen den Gewindebohrungen 2 vergrößert und die Zuglasche 7 einer Zugbeanspruchung ausgesetzt wird. Die in der Zuglasche 7 herrschende Kraft beaufschlagt wegen der gewählten Anordnung die piezoelektrische Platte 11 mit einer Schubkraft. Die piezoelektrische Platte 11 ist so ausgelegt, daß sie hinsichtlich der auf sie einwirkenden Kräfte nur unter Schub piezoelektrisch anspricht. Handelt es sich bei der Platte 11 um einen piezoelektrischen Kristall, wie Quarz, so wird dies durch Vorsehen eines sog. Y-Schnittes erreicht, bei dem die Oberflächen der piezoelektrischen Platte 11 senkrecht zu der kristallografischen Y-Achse gerichtet sind. Wird dagegen statt eines piezoelektrischen Kristalls eine Piezokeramik für die Platte 11 verwendet, muß die elektrische Polarisationsrichtung in der Plattenebene liegen und parallel zur Meßstrecke sein, wodurch wiederum ein auf Schub beanspruchtes Element entsteht. Die piezoelektrische Platte 11 wird beim Zusammenbau des Dehnungsaufnehmers nach Fig. 1 dergestalt ausgerichtet, daß die Zugkraft der Zuglasche 7 in Richtung der kristallografischen X-Achse wirkt. Die Elektrode 10 steht über ein Kabel 12 mit einem Verstärker 13 in Verbindung.

Der Vorteil aus der Verwendung des piezoelektrischen Schubeffektes wird deutlich, wenn man die Matrix der Piezokonstanten von einem Quarzkristall als typisches Beispiel betrachtet.

Matrix der Piezokonstanten von Quarz:

$$
\begin{array}{cccccc}
d_{11} & -d_{11} & 0 & d_{14} & 0 & 0 \\
0 & 0 & 0 & 0 & -d_{14} & -2\,d_{11} \\
0 & 0 & 0 & 0 & 0 & 0
\end{array}
$$

oder in Zahlen bzw. $10^{-12}$ C/N

$$
\begin{array}{cccccc}
2{,}31 & -2{,}31 & 0 & -0{,}727 & 0 & 0 \\
0 & 0 & 0 & 0 & 0{,}727 & -4{,}62 \\
0 & 0 & 0 & 0 & 0 & 0
\end{array}
$$

Die piezoelektrischen Aufnehmer bekannter Bauart, die mit Quarzkristallen arbeiten, verwenden sogenannte X-Schnittplatten unter Ausnutzung des longitudinalen piezoelektrischen Effektes $d_{11}$. Dies bedeutet, daß die Platten senkrecht zur Oberfläche belastet werden und Ladungen auf beiden Plattenoberflächen entstehen. Aus der obigen Matrix geht hervor, daß auch durch den Transversaleffekt Ladungen auf den Plattenoberflächen einer X-Platte auftreten, d. h. wenn die Platte von der Seite her in Richtung der Y-Achse radial gedrückt wird, entstehen ebenfalls große Ladungen, die sich als Fehlersignal bemerkbar machen können. Bei einem senkrechten Druck auf die Platte besteht nämlich die Tendenz des Materials, wegen des sog. Poisson-Effektes seitlich auszuweichen, was jedoch durch die angrenzenden Elektroden teilweise unterdrückt wird. Infolge dieser Unterdrückung entstehen radiale Kräfte, die via Transversaleffekt piezoelektrische Ladungen hervorrufen, welche die vom Longitudinaleffekt erzeugten Ladungen teilweise kompensieren. Die insgesamt vorliegenden Ladungen sind demnach vom Unterdrückungsgrad der Querausdehnung abhängig. Eine Kraft erzeugt somit nicht dieselbe piezoelektrische Ladung, wenn die in der Mitte oder am Rand einer Platte einwirkt. In der Mitte ist der Unterdrückungsgrad größer, da die belasteten Plattenbereiche von nicht belasteten umgeben sind, welche die Querausdehnung behindern. Dagegen kann an den Randbereichen der Platte die Querausdehnung wenigstens in einer Richtung unbehindert erfolgen. Wirkt weiter auf die Oberfläche einer X-Schnittplatte ein Biegemoment, z. B. um die Z-Achse, sollte auf der Platte eigentlich keine piezoelektrische Ladung erscheinen, da das Kräftepaar auf der einen Seite der Platte eine positive und auf der anderen Seite eine negative Ladung hervorruft, so daß sich die Ladungen gegenseitig aufheben. Steht die Platte jedoch unter einer Vorspannkraft, die durch die Mitte der Platte geht, bedeutet das Einwirken eines Biegemomentes eine Verschiebung dieser Kraft in Richtung der Y-Achse zum Rand der Platte hin, wo die Behinderung der Querausdehnung geringer und der Piezoeffekt größer ist. Die Kraft erzeugt dann eine größere piezoelektrische Ladung, was scheinbar die Wirkung des Momentes ist.

Aus der obigen Matrix geht weiter hervor, daß ein Schubeffekt $d_{14}$ existiert, der auf der X-Schnittfläche ebenfalls eine Ladung erzeugen kann. Da jedoch die Kompression in X-Richtung nicht analog zur Querausdehnung infolge des Poisson'schen Effektes mit einer Winkeldeformation verbunden ist, entstehen keine Deformationsunterdrückungen, und ist eine Sekundärwirkung des Schubeffektes nicht gegeben.

Eine Y-Schnittplatte reagiert daher nur auf Schub in X-Richtung, so daß sekundäre Störeffekte infolge der Poisson'schen Querausdehnung sowie transversale Piezoelektrizität nicht vorliegen. Der zweite Schubeffekt $-d_{14}$ stört ebenfalls nicht. Die piezoelektrische Empfindlichkeit einer solchen Platte wird also nicht durch Vorspannmomente im Dehnungsaufnehmer, die sich bei der Dehnung der Unterlage verändern können, beeinflußt. Vielmehr reagiert die Platte nur auf die einwirkende Schubkraft, was einen wesentlichen Vorteil bedeutet, da eine verbiegungsfreie Befestigung des Dehnungsaufnehmers praktisch nicht möglich ist. Dieser Vorteil aus dem piezoelektrischen Schubeffekt gegenüber dem Transversal- und Longitudinaleffekt ist bei den meisten piezoelektrischen Materialien vorhanden, also nicht nur bei Quarz.

Je nachdem, ob der Querschnitt $S_1$ der Zuglasche 7 größer oder kleiner gewählt wird bzw. die freie Überbrückungslänge $l_1$ der Zuglasche 7 zwischen den beiden Blockanordnungen in Fig. 1 kürzer oder länger ist, wird bei einer bestimmten Dehnung des Prüfkörpers eine mehr oder minder große Kraft auf die piezoelektrische Platte 11 übertragen und ist somit deren Ausgangssignal entsprechend größer oder kleiner. Durch Veränderung des Querschnittes $S_1$ oder der Länge $l_1$ kann daher die Empfindlichkeit des Dehnungsaufnehmers nach Fig. 1 leicht abgestimmt werden. Jedoch sollte die Zuglasche 7 nicht so steif sein, daß zu große Kräfte entstehen, die zu einem Rutschen des Dehnungsaufnehmers auf der Oberfläche des Prüfkörpers führen könnten.

Ein weiterer Dehnungsaufnehmer ist in Fig. 2 gezeigt. Der hier wiedergegebene Dehnungsaufnehmer eignet sich besonders für größere Meßbereiche, z. B. wenn der Prüfkörper aus einem anderen Material als einer Eisenlegierung besteht; er hat dafür i. R. eine geringere Empfindlichkeit.

In Fig. 2 bedeuten das Bezugszeichen 1 wieder die Oberfläche des Prüfkörpers, 2 ein Paar beabstandete Gewindebohrungen, 3 eine Befestigungsschraube und 4 eine Spannschraube. Das Kraftübertragungsglied 21 setzt sich hier ebenfalls grundsätzlich aus zwei in Abstand voneinander befindliche Blockanordnungen zusammen, von denen die eine, in der Zeichnung linke, mittels der Befestigungsschraube 3 und die andere, in der Zeichnung rechte, mittels der Spannschraube 4 auf die Oberfläche des Prüfkörpers aufgedrückt wird. Die beiden Blockanordnungen sind jedoch anders als bei Fig. 1 über das elastische Element dieser Ausführungsform darstellendes Federglied 22 nach Art einer Biegefeder vorzugsweise integral miteinander verbunden. Die Biegesteifigkeit des Federgliedes 22 kann durch entsprechende Bemessung der Länge $l_2$ und des Querschnittes $S_2$ in weiten Grenzen verändert werden. Durch nachträgliche Bearbeitung des Federgliedes 22, gegebenenfalls sogar im montierten Zustand, ist eine Abstimmung der Empfindlichkeit des Dehnungsaufnehmers auf einen bestimmten gewünschten Wert leicht möglich. Wie bei der vorbeschriebenen Ausführungsform werden in der rechten Blockanordnung die Isolationsplatte 9, die Elektrode 10 und die piezoelektrische Y-Schnittplatte 11 durch die Spannschraube 4 zwischen einem Abschnitt des Kraftübertragungsgliedes 21 und einer auf der Oberfläche des Prüfkörpers aufliegenden Schubplatte 14 eingeklemmt.

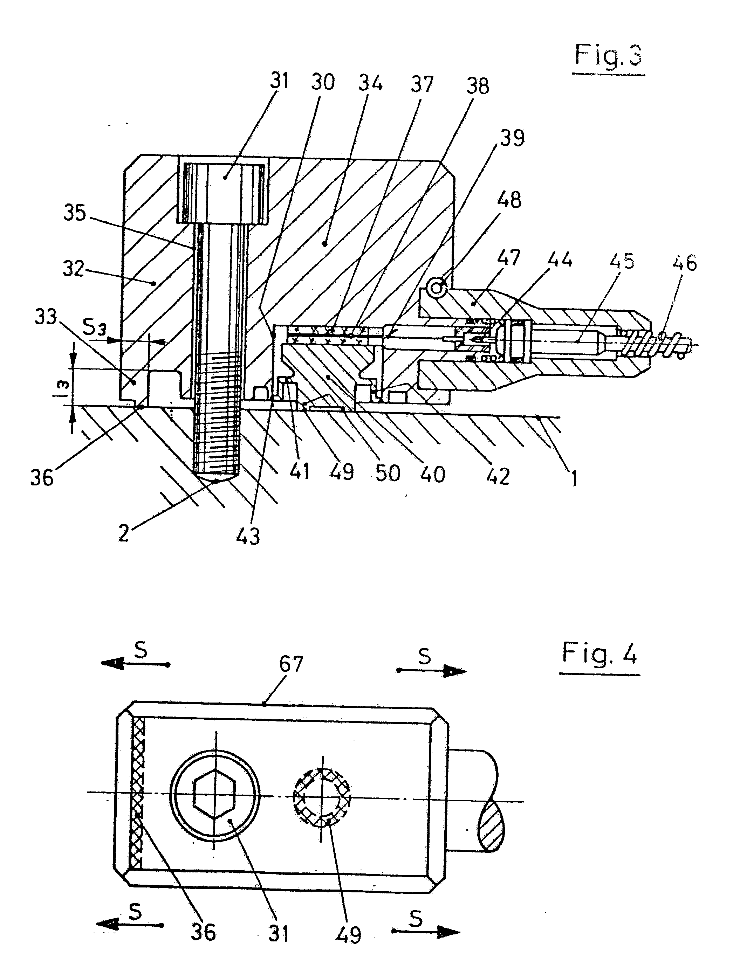

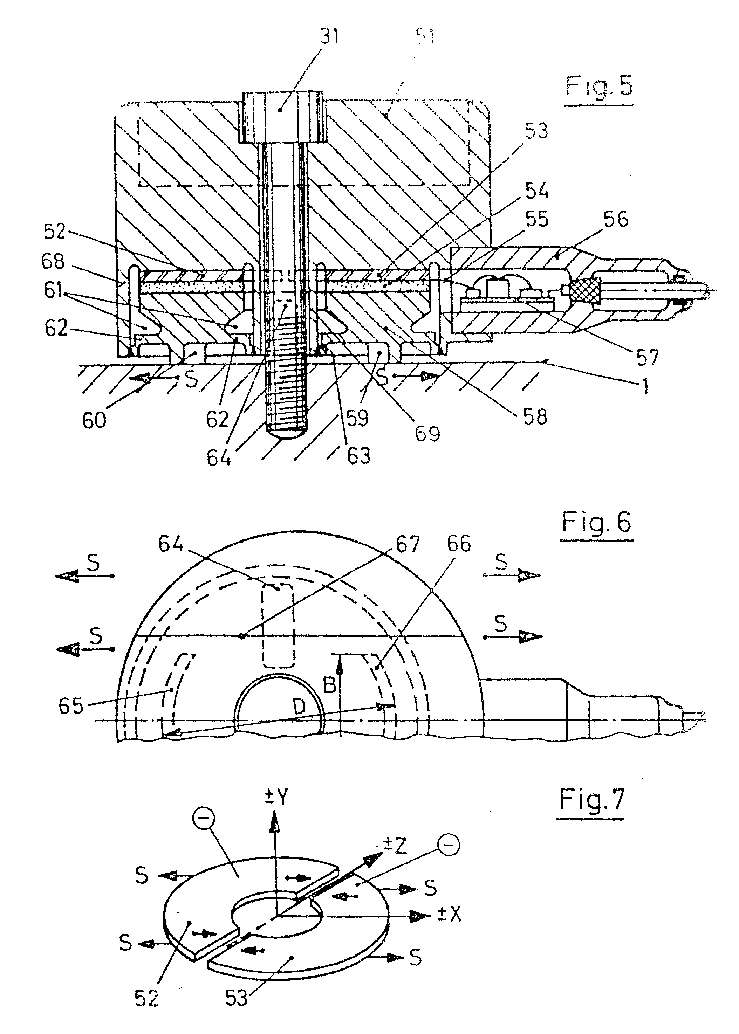

Die Dehnungsaufnehmer nach Fig. 1 und 2 erfordern zwei Schrauben 3, 4 für die Ankopplung am Prüfkörper. Die Schrauben erfüllen dabei eine Doppelfunktion, indem sie nicht nur der Befestigung des Dehnungsaufnehmers auf der Oberfläche des Prüfkörpers dienen, sondern auch an der Übertragung der Längenänderung der Meß- oder Basisstrecke des Prüfkörpers beteiligt sind. Die Zweischrauben-Ausführung ist nicht nur mit einem entsprechend höheren Arbeitsaufwand bei der Montage und Demontage des Dehnungsaufnehmers verbunden, sondern kann auch zu Schwierigkeiten führen, wenn die Richtung der auf den Prüfkörper einwirkenden Kräfte von vornherein nicht genau bekannt ist. Diese Probleme werden mit den erfindungsgemäßen Dehnungsaufnehmern gemäß Fig. 3 und 5 beseitigt.

In Fig. 3 bedeuten das Bezugszeichen 1 wieder die einer Dehnung unterworfene Oberfläche des Prüfkörpers und das Bezugszeichen 2 eine einzelne Gewindebohrung in der Oberfläche des Prüfkörpers, in die eine Spannschraube 31 zur Befestigung des Dehnungsaufnehmers eingeschraubt werden kann. Der Dehnungsaufnehmer nach Fig. 3 umfaßt ein Kraftübertragungsglied 32, welches einen elastischen Teilbereich 33 an einem Ende und ein Brückenteil 34 im Bereich seines anderen Endes aufweist. Des weiteren ist, wie dargestellt, im Kraftübertragungsglied eine Bohrung 35 ausgebildet, durch die sich die Spannschraube 31 hindurcherstreckt. Der elastische Teilbereich 33 des Kraftübertragungsgliedes, der hier in Form einer jedoch nicht notwendigerweise integral angeformten, sich in Richtung auf die Oberfläche 1 des Prüfkörpers erstreckenden und quer zur Längsachse bzw. Bezugsfläche 67 des Dehnungsaufnehmers liegenden Leiste ausgebildet ist, weist eine auf der Oberfläche 1 des Prüfkörpers aufliegende gerade Auflagefläche 36 (Fig. 4) auf, die durch die Vorspannkraft der Spannschraube 31 gegen die Oberfläche des Prüfkörpers gepreßt wird und eine der beiden Einrichtungen darstellt, mit denen der Dehnungsaufnehmer kraftschlüssig an die Oberfläche des Prüfkörpers angekoppelt wird. Wie dargestellt, ist im Bereich des in Richtung der Meßstrecke anderen Endes des Kraftübertragungsgliedes 32, speziell im Brückenteil 34, eine Aussparung 30 vorgesehen, die eine Schubplatte 40 aufnimmt. Zwischen der der Oberfläche des Prüfkörpers abgewandten Fläche der Schubplatte 40 und der gegenüberliegenden Oberfläche der Aussparung 30 im Brückenteil 34 sind zwei übereinanderliegende piezoelektrische Platten 37, 38 mit einer dazwischen angeordneten Elektrode 39 unter Vorspannung gehalten. Die Elektroden 39 und eine in geeigneter Weise am Dehnungsaufnehmer befestigte Steckbuchse 44 stehen elektrisch miteinander in Verbindung. Die Schubplatte 40 weist, wie dargestellt, eine im wesentlichen horizontale Abdeckringscheibe 41 und eine sich vom äußeren Ende der Abdeckringscheibe nach unten erstreckende Abdeckhülse 42 auf, die durch eine Schweißverbindung 43 an benachbarten Stellen der Aussparung 30 im Brückenteil 34 befestigt ist. Die Schubplatte 40, die Abdeckringscheibe 41 und die Abdeckhülse 42 stellen vorzugsweise integrale Teile dar und sind aus einem Stück gedreht. Sie decken die piezoelektrischen Platten 37 und 38 nach unten ab und schützen sie so vor einem Eindringen von Staub und Feuchtigkeit. Des weiteren werden die Schubplatten 40, die piezoelektrischen Platten 37, 38 und die Elektrode 39 durch die Abdeckringscheibe 41 und die Abdeckhülse 42 infolge von deren Federkraft gegen das Brückenteil 34 gespannt. Die Abdeckringscheibe 41 und die Abdeckhülse 42 weisen jedoch ausreichende Elastizität auf, so daß seitliche Verschiebungen der Schubplatte 40 ohne wesentliche Behinderung möglich sind. Die genannte Vorspannwirkung durch die Teile 41, 42 wird durch die Vorspannkraft der Spannschraube 31 noch erhöht. Mit 45 ist ein Stecker bezeichnet, der, wie dargestellt, in eine Steckbuchse 44 eingreift, die an einem hochisolierenden, rauschfreien, abgeschirmten Kabel 46 befestigt ist. Eine Hülse 47 dient zur Befestigung des Kabels 46 am Kraftübertragungsglied 32, und ein Sicherungsstift 48 verkeilt die Hülse 47 im Übertragungsglied 32. Das Kabel 46 leitet die mittels der Elektrode 39 von den piezoelektrischen Platten 37 und 38 abgenommenen Ladungen zu einem nicht gezeigten externen Ladungsverstärker.

Die Schubplatte 40 trägt erfindungsgemäß an ihrer der Oberfläche 1 des Prüfkörpers zugewandten Seite einen Ringsteg 50 mit einer ringförmigen Auflagefläche 49 (Fig. 4), die auf der Oberfläche des Prüfkörpers aufliegt. Die ringförmige Gestalt der Auflagefläche 49 wurde gewählt, um eine möglichst gleichmäßige Lastverteilung auf die piezoelektrischen Platten 37 und 38 zu erhalten, wobei die Höhe des Ringsteges 50 derart ist, daß sich die Auflagefläche 49 der Dehnung des umspannten Oberflächenbereiches des Prüfkörpers ohne Rutschen elastisch anpassen kann. Das Ende der Meßstrecke ist dann ein virtueller Punkt, der ungefähr in der Mitte des von dem Ringsteg 50 umgebenen Oberflächenbereiches des Prüfkörpers liegt. Die ringförmige Krafteinleitung in die Schubplatte 40 hat u. a. den Vorteil, daß bei leicht konvexen oder konkaven Prüfkörperflächen sich die Spannungsverteilung bzw. Belastung der piezoelektrischen Platten 37 und 38 nur wenig ändert, während z. B. bei Vorsehen einer kreisflächenförmigen Auflagefläche die Krafteinleitung punktförmig in der Mitte oder am Rand erfolgen würde und die daraus resultierenden unterschiedlichen Spannungsverteilungen zu unterschiedlichen Empfindlichkeiten des Dehnungsaufnehmers führen könnten. Ein anderer wesentlicher Vorteil aus der ringförmig gestalteten Auflagefläche 49 liegt darin, daß die Schubplatte 40 sich nur seitlich verschieben, jedoch nicht abkippen kann, da durch die flächenhafte Ausdehnung der Auflage die Schubplatte 40 gezwungen ist, die horizontale bzw. oberflächenparallele Lage beizubehalten. Eine Schneide als Auflagefläche würde dagegen eine Drehung um die Auflagekante ermöglichen, so daß die Schubplatte 40 ein Biegemoment auf die piezoelektrischen Platten 37 und 38 übertragen würde, die dadurch ziemlich stark verformt werden. Die Schubplatte 40 stellte dann im übertriebenen Sinne einen Hebel und die piezoelektrischen Platten 37 und 38 wegen ihres niedrigen Elastizitätsmoduls und der Spaltelastizitäten ein Gelenk dar. Eine solche Anordnung hätte die Funktion eines Biegebalkens mit niedriger Federkonstanten, und dementsprechend würde die übertragene Kraft und damit die Empfindlichkeit klein sein.

Diese Biegeelastizität wird durch die Oberflächenführung stark vermindert. Der Ringsteg 50 muß weiter einerseits eine gewisse Stabilität besitzen, um kleine Momente übertragen zu können und andererseits eine solche Flexibilität aufweisen, daß sich die Auflagefläche 49 am Ringsteg 50 der Oberfläche 1 des Prüfkörpers anpassen kann. Optimale Verhältnisse sind gegeben, wenn die beiden Auflageflächen 36, 49 mit einer Flächenpressung von $2 \times 10^8$ bis $3 \times 10^8$ N/m² auf die Oberfläche des Prüfkörpers aufdrücken. Die Oberfläche des Prüfkörpers wird durch diesen Druck nicht beschädigt, und weiter kann der Dehnungsaufnehmer beliebig oft montiert und demontiert werden. Bei bekannten Dehnungsaufnehmern mit Schneiden oder Zacken, die sich in die Prüfkörperoberfläche eingraben, bereitet die Demontage und Montage Schwierigkeiten, wenn die ursprüngliche Empfindlichkeit reproduziert werden soll.

Da die Spannschraube 31 im wesentlichen in der Mitte der Meßstrecke liegt, erleidet sie bei einer Dehnung des Prüfkörpers keine Verschiebung gegenüber diesem bzw. der Gewindebohrung 2. Die Spannschraube 31 übt deshalb, obwohl sie eine dritte kraftschlüssige Verbindung darstellt, keinen störenden Einfluß aus. Zudem liegt die Spannschraube 31 mit ihrem Kopf auf dem Brückenteil 34 des Übertragungsgliedes 32 auf und hat der Schraubenschaft ein ausreichendes Spiel in der Bohrung 35. Die Spannschraube 31, als Biegebalken betrachtet, ist verhältnismäßig lang, wobei die Federkonstante der Schraube im Vergleich zu den anderen Federkonstanten gering ist. Eine eventuell noch vorhandene Restverschiebung durch schlecht abgestimmte Elastizitäten — links und rechts — führt nur zu vernachlässigbar kleinen Fehlern. Da der elastische Teilbereich 33 des Kraftübertragungsgliedes eine geringe Querschnittsfläche hat, sollte die Auflagefläche 36 nicht gekrümmt, sondern gerade ausgebildet sein. Außerdem ist insbesondere eine ringförmige Gestalt der Auflagefläche 36 nicht notwendig, da an dieser Stelle eine direkte Wirkung auf die piezoelektrischen Platten nicht gegeben ist.

Die Auflagefläche 36 ist, wie in Fig. 3 gezeigt, erfindungsgemäß in bezug auf die Mittelachse des elastischen Bereiches 33 gegen die Mitte der Meßstrecke bzw. des Dehnungsaufnehmers versetzt angeordnet. Durch diese exzentrische Krafteinleitung erfährt der elastische Bereich 33 infolge der Vorspannkraft der Schraube 31 ein Moment im Gegenuhrzeigersinn. Dieses Moment würde an und für sich eine Verbiegung des Bereiches 33 und eine Verschiebung der Auflagefläche 36 gegen die Mitte der Meßstrecke zur Folge haben. Diese Verschiebung kommt jedoch nicht zum Tragen, da ein zweites Moment im Uhrzeigersinn ebenfalls, durch die Vorspannkraft der Schraube 31 verursacht, auf das Brückenteil 34 einwirkt und dieses schwach verbiegt. Diese Verbiegung will die Auflagefläche 36 in umgekehrtem Sinn, wie vorher besprochen, verschieben. Die Elastizitäten vom elastischen Bereich 33 und Brückenteil 34 können daher so aufeinander abgestimmt werden, daß die beiden Verschiebungen der Auflagefläche 36 infolge der Verbiegung der Teile 33 und 34 sich gegenseitig kompensieren bzw. unabhängig davon sind, wie stark die Schraube 31 angezogen wurde. Diese Unabhängigkeit von der Schraubenvorspannung ergibt zwei Vorteile:

1. Sollte sich bei der Dehnung des Prüfkörpers 1 ebenfalls eine Verbiegung einstellen, was die Schraubenvorspannung verändern wird, so hat dies keinen Einfluß auf das Meßresultat.
2. Wenn die Kompensation nicht vorhanden wäre, ergäbe sich beim Spannen der Schraube 31 schon eine Vorspannung der piezoelektrischen Platten 37 und 38 bzw. eine Verlagerung des 0-Punktes aus der Mitte des Arbeitsbereiches. Dies bedeutete eine Einschränkung des Meßbereiches, wenn Schwingungen mit gleich großen positiven wie negativen Amplituden gemessen werden sollen.
Letzteres ist meistens der Fall.

Eine Dehnung der Oberfläche 1 des Prüfkörpers bewirkt eine Verlängerung des Abstandes zwischen den Auflageflächen 36 und 49. Diese Verlängerung führt zu einer Verbiegung des elastischen Teilbereiches oder Elementes 33, wobei jedoch auch das Brückenteil 34 und die Schubplatte 40 leichte Biegungen erleiden. Der Biegung überlagert sich weiter eine Schubverformung des elastischen Teilbereiches 33, des Brückenteils 34, der piezoelektrischen Platten 37 und 38 und der Schubplatte 40. Durch geeignete Dimension der Dicke $S_3$ und der Länge $l_3$ des elastischen Teilbereiches 33 kann die Empfindlichkeit des Dehnungsaufnehmers abgestimmt werden. Dabei ist anzumerken, daß nicht nur der Dehnungsaufnehmer selbst durch die Verformung der Prüfkörperoberfläche eine Deformation erfährt, sondern daß er auch Kräfte auf die Oberfläche des Prüfkörpers ausübt und dadurch sekundäre Verformungen in umgekehrter Richtung zu der primären Dehnung der Oberfläche hervorruft. Eine Abstimmung bzw. Alibrierung des Dehnungsaufnehmers ist daher immer nur für das gleiche Unterlagematerial zutreffend.

Fig. 5 zeigt eine weitere bevorzugte Ausführungsform eines Dehnungsaufnehmers nach der Erfindung. Bei dieser Ausführungsform sind zwei piezoelektrische halbringförmige Platten 52 und 53 sowie ein Schubring 58 mit daran angeformten Abstützstegen 59 und 60 konzentrisch um die Spannschraube 31 angeordnet. Ähnlich wie bei der Ausführungsform nach Fig. 3 ist der Schubring 58 an seinem inneren und äußeren Umfangsbereich mit Einstichen oder Ausnehmungen 61 versehen, die jeweils eine innere bzw. äußere Abdeckringscheibe 62 bilden, welche unter axialer Vorspannung stehen. Von jeder Abdeckringscheibe 62 erstreckt sich, wie dargestellt, eine Abdeckhülse 63 nach unten. Der Schubring ist, wie dargestellt, in einem Raum zwischen zwei beabstandeten elastischen Gehäuseteilen 68, 69 aufgenommen, welche sich vom Gehäuseblock 51 nach unten in Richtung auf die Oberfläche 1 des Prüfkörpers bis in die nähe des betreffenden unteren Endes der Abdeckhülsen 63 erstrecken. Jede Abdeckhülse 63 steht an ihrem unteren Ende mit dem betreffenden Gehäuseteil 68, 69, z. B. durch eine Schweißnaht, in Verbindung.

Der Schubring 58 ist weiter gemäß Fig. 5 und 6 mit einem Einschnitt 64 von bestimmter Tiefe versehen, um den Kraftnebenschluß, d. h. die direkte Übertragung von Kräften zwischen den Stegen 59 und 60 zu reduzieren bzw. abzustimmen. Der Einschnitt 64 erstreckt sich durch den Mittelpunkt des Schubringes senkrecht zur Meßstrecke.

Anstelle der direkten Ladungssignalabführung gemäß Fig. 3 kann weiter vorzugsweise gemäß Fig. 5 ein Miniaturverstärker 57 entweder im Gehäuseblock 51 oder in einer daran befestigten Hülse 56 angeordnet sein. Damit ergibt sich der Vorteil einer gegen Isolationsverluste und Störeinflüsse unempfindlichen Signalableitung mit niedriger Impedanz. Solche und ähnliche Miniaturverstärker sind z. B. in der Schweizer Patentschrift 54 243 beschrieben. Es versteht sich, daß anstelle des Vorsehens von einem integrierten Miniaturverstärker 57 auch ein getrennter Verstärker mit der Anordnung zur Ladungsabteilung gemäß Fig. 3 und umgekehrt verwendet werden kann.

Fig. 6 zeigt den Dehnungsaufnehmer nach Fig. 5 in Draufsicht. Für eine optimale Abstützung und Übertragung der Schubkräfte S auf die piezoelektrischen Platten 52 und 53 ist eine geeignete Dimensionierung der Länge B und des Durchmessers D der an den elastischen Stegen 59, 60 befindlichen Auflageflächen 65 und 66 von Bedeutung. Das elastische Verhalten bei der vorliegenden Ausführungsform bestimmt sich daher aus der Elastizität des durch den Einschnitt 64 verbleibenden Restquerschnittes des Schubringes sowie der teilkreisförmig gekrümmten Stege 59 und 60.

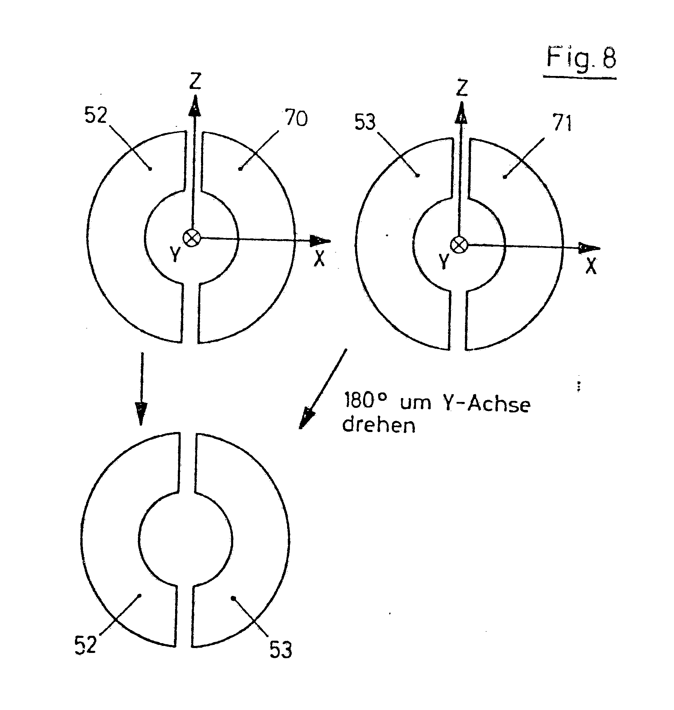

Wie erwähnt, sind bei der Ausführungsform nach Fig. 5 und 6 die piezoelektrischen Platten 52 und 53 vorzugsweise in Form von zwei halbringförmigen Scheiben ausgebildet. Die Anordnung dieser piezoelektrischen Platten 52 und 53 mit den entsprechenden Kristallachsen X, Y, Z ist in Fig. 7 im Detail gezeigt. Fig. 8 zeigt, wie die piezoelektrischen Platten 52 und 53 dadurch bereitgestellt werden können, daß man aus zwei gelochten piezoelektrischen, nur auf Schubkräfte ansprechenden Platten durch je einen Schnitt längs der Z-Achse vier halbringförmige Platten 52, 53, 70, 71 herstellt. Damit bei Einleitung der Schubkräfte S (Fig. 5) über die Stege 59 und 60, den Schubring 58, die Isolationsplatte 54 und die Elektrode 55 auf die piezoelektrischen Platten 52 und 53 jeweils auf einer Seite nur Ladungen gleicher Polarität entstehen, muß die Paarung der piezoelektrischen Platten so erfolgen, daß die kristallografische X-Achse der Platte 53 entgegengesetzt zur kristallografischen X-Achse der Platte 52 verläuft. Fig. 8 zeigt im Detail, wie die Kombination der Platten 52 und 53 vorzunehmen ist. In gleicher Weise sind die Platten 70 und 71 als Paar verwendbar, jedoch ergibt das einen Aufnehmer mit umgekehrter Polarität. Bei der Montage des Dehnungsaufnehmers versteht es sich, daß die piezoelektrischen Platten 52 und 53 bezüglich ihrer Achsen sehr genau in Übereinstimmung mit den in Fig. 6 gezeigten Aufnehmerbezugsflächen 67 (nur eine ist dargestellt) angeordnet werden müssen. Im übrigen wird bezüglich der weiteren Konstruktionsmerkmale auf die Beschreibung zu der Ausführungsform nach Fig. 3 verwiesen.

Anders als die Aufnehmerbauarten nach Fig. 1 und 2 bieten die Ausführungsformen nach Fig. 3 und 5 des Dehnungsaufnehmers mit nur einer einzigen Spannschraube 31 den Vorteil, daß sich diese Dehnungsaufnehmer bei nicht genau bekannter Richtung des Spannungsfeldes S im Prüfkörper leicht auf die maximale Spannungs- bzw. Dehnungsverhältnisse einstellen lassen, indem nach jedem Kalibrierungsvorgang die Aufnehmerbezugsflächen 67 um einen bestimmten Winkel gegenüber der Oberfläche des Prüfkörpers verdreht werden, bis eine maximale Signalabgabe angezeigt wird. Gegenüber den Zwei- oder Mehrschraubenausführungen nach Fig. 1 und 2 bieten daher die Einschraubenausführungen nach Fig. 3 und 5 wesentliche Anwendungsvorteile.

Bei sämtlichen beschriebenen Ausführungsformen der Erfindung können zur Signalverarbeitung handelsübliche Anzeigegeräte für Schwell- oder Maximalwerte mit angeschlossenen Umschaltrelais je nach Verwendungszweck der Überwachungsanlage verwendet werden. Um eine genaue und repetierbare Meßwertanzeige zu erhalten, wird die gesamte Meßkette vorteilhafterweise in situ kalibriert. Dazu wird z. B. bei einer Überwachungsanlage für Pressen ein Referenzkraftmeßelement unter den Pressenstempel gelegt, worauf die Kalibrierung stufenweise vorgenommen werden kann.

**Patentansprüche**

1. Piezoelektrischer Dehnungsaufnehmer zur Ermittlung der Dehnung einer Meßstrecke auf der Oberfläche eines Prüfkörpers und/oder einer auf den Prüfkörper einwirkenden Kraft, mit wenigstens einer unter Vorspannung gehaltenen piezoelektrischen Platte und einem an die Enden der Meßstrecke ankoppelbaren Kraftübertragungsglied zur abstimmbaren Kraftbeaufschlagung der piezoelektrischen Platte, dadurch gekennzeichnet, daß

a) die wenigstens eine piezoelektrische Platte (37, 38, 52, 53) in an sich bekannter Weise nur auf Schubkräfte ansprechend beschaffen ist, und daß

b) die piezoelektrische Platte in dem durch nur eine Spannschraube (31) kraftschlüssig an die Enden der Meßstrecke über zwei beabstandete Auflageflächen (36, 49, 65, 66) ankoppelbaren Kraftübertragungsglied (32, 34, 40, 51, 58) so angeordnet ist, daß eine Änderung des Abstandes der beiden Auflageflächen die piezoelektrische Platte im wesentlichen nur mit einer Schubkraft beaufschlagt.

2. Dehnungsaufnehmer nach Anspruch 1, dadurch gekennzeichnet, daß wenigstens eine der Auflageflächen (36, 49, 65, 66) an einem federelastischen Glied (33, 59, 60) vorgesehen ist.

3. Dehnungsaufnehmer nach Anspruch 2, dadurch gekennzeichnet, daß die am federelastischen Glied (33) vorgesehene Auflagefläche (36) geradlinig und die andere, im Bereich der piezoelektrischen Platte (37, 38) befindliche Auflagefläche (49) ringförmig ausgebildet ist.

4. Dehnungsaufnehmer nach Anspruch 3, dadurch gekennzeichnet, daß die eine Auflagefläche (36) schmäler als das federelastische Glied (33) und gegenüber diesem außermittig in Richtung auf die Mitte der Meßstrecke versetzt ist.

5. Dehnungsaufnehmer nach einem der vorhergehenden Ansprüche, gekennzeichnet durch eine die piezoelektrische Platte (37, 38) gegenüber dem Übertragungsglied (32, 34) abstützende Schubplatte (40), die schubelastisch mit dem Übertragungsglied verbunden ist und eine der Auflageflächen (36, 49) aufweist.

6. Dehnungsaufnehmer nach Anspruch 1 oder 2, dadurch gekennzeichnet, daß beide Auflageflächen (65, 66) teilkreisförmig ausgebildet sind.

7. Dehnungsaufnehmer nach Anspruch 1, 2 oder 6, gekennzeichnet durch einen die federelastischen Glieder (59, 60) und die Auflageflächen (65, 66) aufweisenden, in einem Gehäuseblock (51) angeordneten Schubring (58), wobei der Schubring, die Auflageflächen sowie die zwischen Schubring und Gehäuseblock angeordnete piezoelektrische Platte (52, 53) konzentrisch zur Spannschraube (31) liegen.

8. Dehnungsaufnehmer nach Anspruch 7, dadurch gekennzeichnet, daß der Schubring (58) Einstiche (61) aufweist, die relativ zur Längsachse der Spannschraube (31) längselastische Abdeckringscheiben (62) und querelastische Abdeckhülsen (63) bilden, welch letztere mit benachbarten rohrförmigen konzentrischen Bereichen (68, 69) des Gehäuseblockes (51) dicht verbunden sind.

9. Dehnungsaufnehmer nach Anspruch 7 oder 8, dadurch gekennzeichnet, daß der Schubring (58) einen Einschnitt (64) zur Anpassung des elastischen Kraftnebenschlusses aufweist.

10. Dehnungsaufnehmer nach einem der vorhergehenden Ansprüche, dadurch gekennzeichnet, daß der Auflagedruck der Auflageflächen (36, 49, 65, 66) $2 \times 10^8 - 3 \times 10^8$ N/m² beträgt und einstellbar ist.

11. Dehnungsaufnehmer nach Anspruch 2, dadurch gekennzeichnet, daß dessen Meßempfindlichkeit durch Veränderung der Federkonstanten des betreffenden federelastischen Gliedes abstimmbar ist.

12. Dehnungsaufnehmer nach Anspruch 1, dadurch gekennzeichnet, daß die piezoelektrische Platte (37, 38, 52, 53) aus Quarzeinkristall besteht.

13. Dehnungsaufnehmer nach Anspruch 12, dadurch gekennzeichnet, daß die piezoelektrische Platte (37, 38) eine im Y-Schnitt geschnittene Quarzvollscheibe ist.

14. Dehnungsaufnehmer nach Anspruch 12, dadurch gekennzeichnet, daß die piezoelektrische Platte (52, 53) in Y-Schnitt aus zwei Ringsegmenten gebildet ist, die so angeordnet sind, daß an einer Elektrode (55) nur elektrisch gleichpolige Plattenoberflächen anliegen.

15. Dehnungsaufnehmer nach Anspruch 12, dadurch gekennzeichnet, daß die kristallografische X-Achse der piezoelektrischen Platte (37, 38, 52, 53) parallel zur Längsachse (67) des Dehnungsaufnehmers ausgerichtet ist.

16. Dehnungsaufnehmer nach einem der vorhergehenden Ansprüche, gekennzeichnet durch einen eingebauten Miniaturverstärker (57).

17. Dehnungsaufnehmer nach einem der vorhergehenden Ansprüche, dadurch gekennzeichnet, daß anstelle einer die piezoelektrische Platte unterliegenden Isolationsplatte eine weitere piezoelektrische Platte vorgesehen und zwischen den piezoelektrischen Platten eine Elektrode eingeklemmt ist.

18. Dehnungsaufnehmer nach Anspruch 1, dadurch gekennzeichnet, daß die piezoelektrische Platte (37, 38, 52, 53) eine nur auf Schubkräfte ansprechend polarisierte Piezokeramik ist.

**Claims**

1. A piezoelectric strain transducer for determining the elongation of a measuring section on the surface of a test element and/or a force acting on the test element, having at least one piezoelectric plate held under pretension, and a force-transmitting member for tunably applying a force to the piezoelectric plate, characterized in that

a) the said at least one piezoelectric plate (37, 38, 52, 53) in a manner known per se is conditioned to solely respond to shear forces and

b) that the piezoelectric plate is arranged in said force-transmitting member (32, 34, 40, 51, 58) such that, upon a change of length of two spaced bearing surfaces (39, 49, 65, 66) substantially only a shear force acts on the piezoelectric plate, said force-transmitting member by means of a single fastening screw (31) is adapted to be frictionally coupled to the ends of the measuring section through said bearing surfaces.

2. Strain transducer according to claim 1, characterized in that at least one of the bearing surfaces (36, 49, 65, 66) is provided on the resilient member (33, 59, 60).

3. Strain transducer according to claim 2, characterized in that the bearing surface (36) provided on the resilient member (33) is straight and the other bearing surface (49) located in the region of the piezoelectric plate (37, 38), has an annular configuration.

4. Strain transducer according to claim 3, characterized in that the said one bearing surface (36) is narrower than the resilient member (33) and offset eccentrically with respect to the latter in the direction of the centre of the measuring section.

5. Strain transducer according to one of the preceding claims, characterized by a shear plate (40) supporting the piezoelectric plate (37, 38) with respect to the transmitting member (32, 34), said shear plate being connected in a shear-resilient manner to the transmitting member and comprising one of the said bearing surfaces (36, 49).

6. Strain transducer according to claim 1 or 2, characterized in that both of said bearing surfaces (65, 66) have a partial-circular configuration.

7. Strain transducer according to claim 1, 2 or 6, characterized by a shear ring (58) comprising the resilient members (59, 60) and the bearing surfaces (65, 66) and located in a housing block (51), wherein the shear ring, the bearing surfaces and the piezoelectric plate (52, 63) arranged between the shear ring and housing block, are located concentrically with respect to the fastening screw (31).

8. Strain transducer according to claim 7, characterized in that the shear ring (58) comprises cuts (61), which relative to the longitudinal axis of the fastening screw (31) form longitudinally resilient annular cover plates (62) and transversely resilient covering sleeves (3), the latter being tightly connected to adjacent tubular concentric portions (68, 69) of the housing block (51).

9. Strain transducer according to claims 7 or 8, characterized in that the shear ring (58) comprises a slot (64) for the adaptation of the elastic force by-pass.

10. Strain transducer according to one of the preceding claims, characterized in that the bearing pressure of the bearing surfaces (36, 49, 65, 66) amounts to $2 \times 10^8 - 3 \times 10^8$ N/m² and is adjustable.

11. Strain transducer according to claim 2, characterized in that its measuring sensitivity is adjustable by varying the constant of elasticity of the respective resilient member.

12. Strain transducer according to claim 1, characterized in that the piezoelectric plate (37, 38, 52, 53) consists of a monocrystalline quartz.

13. Strain transducer according to claim 12, characterized in that the piezoelectric plate (37, 38) is a solid disc of quartz cut with a Y-cut.

14. Strain transducer according to claim 12, characterized in that the piezoelectric plate (52, 53) with a Y-cut is formed from two annular segments to be arranged such that only plate surfaces having the same polarity abut an electrode (55).

15. Strain transducer according to claim 12, characterized in that the crystallographic X-axis of the piezoelectric plate (37, 38, 52, 53) is oriented parallel to the longitudinal axis (67) of the strain transducer.

16. Strain transducer according to one of the preceding claims, characterized by an incorporated miniature amplifier (57).

17. Strain transducer according to one of the preceding claims, characterized in that instead of an insulating plate located below the piezoelectric plate, a further piezoelectric plate is provided and an electrode is clamped between the piezoelectric plates.

18. Strain transducer according to claim 1, characterized in that the piezoelectric plate (37, 38, 52, 53) consists of a piezo-ceramic polarised to respond to shear forces only.

**Revendications**

1. Extensomètre piézo-électrique pour la détermination de l'allongement d'une ligne de mesure à la surface d'un objet soumis à examen et/ou d'une force agissant sur l'objet soumis à examen, comprenant au moins une plaque piézo-électrique tenue sous précontrainte et un élément de transmission de force accouplable aux extrémités de la ligne de mesure pour appliquer, d'une manière ajustable, une force sur la plaque piézo-électrique, caractérisé en ce que

a) ladite au moins une plaque piézo-électrique (37, 38, 52, 53) est réalisée, d'une façon en soi connue, de sorte à ne répondre qu'aux forces de cisaillement et en ce que

b) la plaque piézo-électrique est disposée dans l'élément de transmission de force (32, 34, 40, 51, 58) de sorte qu'une variation de la distance de deux faces d'appui (36, 49, 65, 66) à distance n'applique à la plaque piézo-électrique, pour l'essentiel, qu'une force de cisaillement, ledit élément de transmission de force étant accouplable frictionnellement au moyen d'une seule vis de serrage (31) aux extrémités de la ligne de mesure par l'intermédiaire des deux faces d'appui.

2. Extensomètre selon revendication 1, caractérisé en ce qu'au moins l'une des faces d'appui (36, 49, 65, 66) est prévue sur un élément ayant l'élasticité d'un ressort (33, 59, 60).

3. Extensomètre selon revendication 2, caractérisé en ce que la surface d'appui prévue sur l'élément ayant l'élasticité d'un ressort (33) est rectiligne et que l'autre face d'appui disposée dans la région de la plaque piézo-électrique (37, 38) est de forme circulaire.

4. Extensomètre selon revendication 3, caractérisé en ce que ladite une face d'appui (36) est plus étroite que l'élément ayant l'élasticité d'un ressort (33) et est décalée par rapport à ce dernier hors de son centre vers le milieu de la ligne de mesure.

5. Extensomètre selon l'une des revendications précédentes, caractérisé par une plaque de cisaillement (40) appuyant les plaques piézo-électriques (32, 34) par rapport à l'élément de transmission de force (32, 34), ledite plaque de cisaillement etant liée élastiquement en cisaillement avec l'élément de transmission de force et comprenant une des faces d'appui (36, 49).

6. Extensomètre selon revendication 1 ou 2, caractérisé en ce que les deux faces d'appui (65, 66) sont en forme d'un secteur circulaire.

7. Extensomètre selon revendication 1, 2 ou 6, caractérisé par un anneau de cisaillement (58) disposé dans un carter (51), comprenant les éléments ayant l'élasticité d'un ressort (59, 60) et les faces d'appui (65, 66), l'anneau de cisaillement, les faces d'appui ainsi que les plaques piézo-électriques (52, 53) disposées entre l'anneau de cisaillement et le carter, etant concentriques par rapport à la vis de serrage (31).

8. Extensomètre selon revendication 7, caractérisé en ce que l'anneau de cisaillement (58) comprend des incisions (61) qui forment, par rapport à l'axe longitudinal de la vis de serrage (31), des couronnes (62) de recouvrement élastiques longitudinalement et des douilles de recouvrement (63) élastiques transversalement, ces dernières étant reliées de façon étanche aux zones tubulaire concentriques voisines (68, 69) du carter (51).

9. Extensomètre selon revendication 7 ou 8, caractérisé en ce que l'anneau de cisaillement (58) comprend une incision (64) à fin d'adaptation du cheminement élastique des forces secondaires.

10. Extensomètre selon l'une des revendications précédentes, caractérisé en ce que la pression d'appui des faces d'appui (36, 49, 65, 66) et de $2 \times 10^8 - 3 \times 10^8$ N/m² et ajustable.

11. Extensomètre selon revendication 2, caractérisé en ce que sa sensibilité de réponse est ajustable par variation de la constante de ressort de l'élément considéré ayant l'élasticité d'un ressort.

12. Extensomètre selon revendication 1, caractérisé en ce que les plaques piézo-électriques (37, 38, 52, 53) sont en monocristal de quartz.

13. Extensomètre selon revendication 12, caractérisé en ce que la plaque piézo-électrique (37, 38) est un disque solide de quartz coupé selon un plan Y.

14. Extensomètre selon revendication 12, caractérisé en ce que la plaque piézo-électrique (52, 53) en coupe Y est formée de deux secteurs annulaire disposés de telle sorte qu'à une électrode ne soient adjacentes que des surfaces de plaques de même polarité électrique.

15. Extensomètre selon revendication 12, caractérisé en ce que l'axe cristallographique X des plaques piézo-électriques (37, 38, 52, 53) est disposé parallèlement à l'axe longitudinal (67) de l'extensomètre.

16. Extensomètre selon l'une des revendications précédentes caractérisé par un amplificateur miniature (57) intégré.

17. Extensomètre selon l'une des revendications précédentes, caractérisé en ce qu'à la place d'une plaque isolante placée sous la plaque piézo-électrique est prévue une autre plaque piézo-électrique et qu'entre ces plaques piézo-électriques est enserrée une électrode.

18. Extensomètre selon revendication 1, caractérisé en ce que la plaque piézo-électrique (37, 38, 52, 53) est une céramique piézo-électrique polarisée à ne répondre qu'aux forces de cisaillement.

Fig. 1

Fig. 2

Fig. 3

Fig. 4

## Fig. 5

31    51

52
68
61
62

60    62    64    63    59    69    58    1

53
54
55    56

57

## Fig. 6

64    67    66

S    S

S    S

65    B    D

## Fig. 7

±Y
±Z
±X

S    S
S
S    S
S

52    53

Fig. 8

180° um Y-Achse drehen